(19) Europäisches Patentamt

European Patent Office

Office européen des brevets

(11) **EP 0 540 077 B1**

(12) **FASCICULE DE BREVET EUROPEEN**

(45) Date de publication et mention
de la délivrance du brevet:
**13.08.1997 Bulletin 1997/33**

(51) Int Cl.6: **H04N 3/223**, H04N 5/44

(21) Numéro de dépôt: **92203096.0**

(22) Date de dépôt: **08.10.1992**

(54) **Appareil d'affichage d'images au format 16/9e pouvant recevoir des images au format 4/3**

Anzeigevorrichtung für ein Bildformat mit dem Seitenverhältnis 16/9, die Bilder mit einem
Seitenverhältnis 4/3 empfangen kann

Image display device with an aspect ratio of 16 to 9 adapted to receive images with an aspect ratio
of 4 to 3

(84) Etats contractants désignés:
**DE ES FR GB IT**

(30) Priorité: **16.10.1991 FR 9112765**
**30.10.1991 FR 9113402**

(43) Date de publication de la demande:
**05.05.1993 Bulletin 1993/18**

(73) Titulaires:
• **PHILIPS ELECTRONIQUE GRAND PUBLIC**
**92150 Suresnes (FR)**
Etats contractants désignés:
**FR**
• **Philips Electronics N.V.**
**5621 BA Eindhoven (NL)**
Etats contractants désignés:
**DE ES GB IT**

(72) Inventeur: **Decraemer, Alain**
**F-75008 Paris (FR)**

(74) Mandataire: **Caron, Jean et al**
**Société Civile S.P.I.D.**
**156, Boulevard Haussmann**
**75008 Paris (FR)**

(56) Documents cités:
**EP-A- 0 298 362**     **EP-A- 0 343 539**
**DE-A- 3 939 884**     **DE-B- 1 121 648**
**GB-A- 2 135 859**     **US-A- 4 277 729**
**US-A- 4 984 081**

## Description

La présente invention concerne un appareil d'affichage d'images pour afficher des images à partir d'un signal vidéo d'entrée, l'appareil étant muni d'un écran d'affichage au format 16/9e, et de moyens d'affichage sur cet écran, comportant un circuit de balayage horizontal et un circuit de balayage vertical, pour afficher sur l'écran une image d'entrée correspondant au signal vidéo d'entrée, l'image affichée étant constituée d'une suite de lignes de longueur DH, mutuellement séparées l'une de l'autre verticalement par un espacement AV, où DH a une valeur DH et AV a une valeur AV quand une image vidéo de format 16/9 est normalement affichée sur l'écran, comportant des moyens analogiques de réglage du balayage horizontal, susceptibles de commander une variation progressive de l'amplitude de balayage par action directe sur le dit circuit de balayage horizontal, et des moyens analogiques de réglage du balayage vertical, susceptibles de commander une variation progressive de l'amplitude de balayage par action directe sur le dit circuit de balayage vertical.

Il existe maintenant sur le marché des récepteurs de télévision prévus pour des images dont le rapport largeur/hauteur, appelé format, est de 16/9°. De telles images sont émises notamment par les satellites de télévision. Par contre une majorité des émissions de télévision est encore au format 4/3.

Lorsqu'on reçoit une image de format 4/3 sur un récepteur dont l'écran est au format 16/9°, il convient de prendre des mesures pour rétablir un format d'image correct, ce qui ne peut pas être obtenu par un simple "zooming". Ceci sera explicité plus loin à l'aide des figures. Dans les récepteurs de haut de gamme, notamment ceux de format 16/9°, qui sont munis de mémoires d'image et de processeurs sophistiqués, permettant des traitements numériques complexes sur les images, il est possible de manipuler les images à volonté pour résoudre le problème mentionné ci-dessus. Un tel récepteur est décrit par exemple dans le brevet US-A-4,984,081.

Par ailleurs, le brevet DE-B-1 121 648 décrit un appareil muni de moyens analogiques pour modifier l'amplitude verticale et une partie de l'amplitude horizontale ensemble afin de créer une sorte d'effet de "zoom". Toutefois, cet appareil ne résout pas le problème mentionné ci-dessus.

L'invention se propose de fournir une solution adaptée pour des récepteurs de télévision standard sans mémoires d'image ni moyens de traitement complexes d'images. En outre, il arrive, lors de la retransmission télévisée de films au format "cinémascope", que des parties importantes de l'image soient inutilisées, notamment une bande au dessous, et une bande au dessus de l'image utile. Il est alors souhaitable de pouvoir agrandir l'image.

A cet effet, un appareil selon l'invention est remarquable en ce que, pour la réception normale d'images d'entrée en format 4/3, il comprend des moyens de commutation pour agir sur les moyens analogiques de réglage du balayage horizontal de façon à donner à l'amplitude du balayage horizontal la valeur DH=3/4 DH$_o$, sans toucher au balayage vertical, et la commande de variation des dits moyens analogiques est accessible à l'usager de l'appareil cependant que ces moyens sont couplés, pour permettre à l'usager d'augmenter de façon progressive DH et AV, tout en maintenant une relation entre DH et AV, telle que :

$$\frac{DH/DH_o}{AV/AV_o} = 3/4, \text{ ou } 3/4\,DH_o \leq DH \leq DH_o$$

Pour une plus grand confort de l'usager, un appareil selon l'invention est avantageusement muni de moyens pour réaliser l'accès de l'usager à la dite commande de variation des dits moyens analogiques de réglage par une télécommande.

Dans un mode de réalisation avantageux, l'appareil, dont l'écran est un tube à rayons cathodiques, est remarquable en ce que le circuit de balayage horizontal avec les moyens analogiques de réglage du balayage horizontal sont constitués par un circuit du type connu sous le nom de modulateur à diodes, associé à un circuit générateur de paraboles pour une correction dite est-ouest, qui comporte des moyens pour agir sur le niveau de tension moyen en courant continu des paraboles dans le circuit générateur de paraboles, pour la commande de l'amplitude horizontale.

L'appareil comprenant en outre un générateur de dents de scie à fréquence trame avec un amplificateur pour injecter le dit courant en dents de scie dans un bobinage déviateur de faisceau, une contre-réaction étant appliquée au dit amplificateur, il est avantageusement muni de moyens pour faire varier le montant de cette contre-réaction afin de faire varier l'espacement entre les lignes, et il comporte des moyens pour écrêter les parties de la dent de scie qui produiraient des points d'image en dehors de l'écran.

En outre, l'appareil étant muni d'un circuit vidéo qui délivre un créneau de tension de suppression de luminance pendant les retours de balayage ligne, il est avantageusement muni de moyens pour délivrer le dit créneau dès qu'une information vidéo cesse d'être présente à la fin d'une ligne, et faire durer ce créneau au moins jusqu'à ce qu'une information vidéo soit à nouveau présente au début de la ligne suivante.

Ces aspects de l'invention ainsi que d'autres aspects plus détaillés apparaîtront plus clairement grâce à la description suivante d'un mode de réalisation constituant un exemple non limitatif.

La figure 1 représente l'écran d'un appareil d'affichage d'images 16/9°, adapté à la réception d'une image 4/3, dans une première situation où la reproduction complète de l'image est souhaitée.

La figure 2 représente l'écran d'un appareil d'affichage d'images 16/9°, qui reçoit sans précaution particulière une émission en format 4/3.

La figure 3 représente l'écran d'un appareil d'affichage d'images 16/9°, adapté à la réception d'une image 4/3, dans une autre situation où une reproduction la plus grande possible de l'image est souhaitée.

La figure 4 montre une situation particulière dans laquelle un film en format "Cinémascope" est transmis selon un standard au format 4/3, et reçu sur un récepteur 16/9e.

La figure 5 est un schéma d'un circuit de balayage vertical connu auquel est ajouté un moyen de régler l'espacement vertical entre les lignes et de limiter l'amplitude verticale totale.

La figure 6 est un schéma partiel d'un circuit pour engendrer des tensions de commande d'amplitude destinées à un modulateur à diodes connu, schéma auquel est ajouté un moyen de régler l'amplitude lignes.

La description qui suit concerne le cas d'une image reçue en format 4/3 sur un appareil récepteur muni d'un écran de format 16/9e. Le principe de l'invention s'appliquerait difficilement au problème inverse, à savoir le cas d'une image reçue en format 16/9e sur un appareil récepteur de format d'écran 4/3, parce qu'alors il faudrait augmenter l'amplitude lignes au dela de la normale, ce qu'on ne sait pas faire facilement. Un des mérites de l'invention est d'avoir remarqué que ce problème ne se posait plus dans le cas d'une image reçue en format 4/3 sur un appareil récepteur 16/9e.

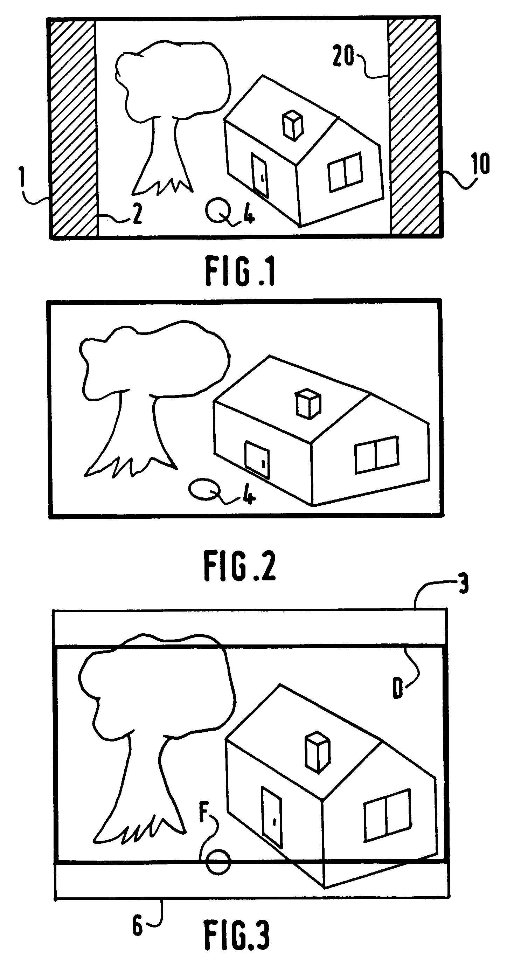

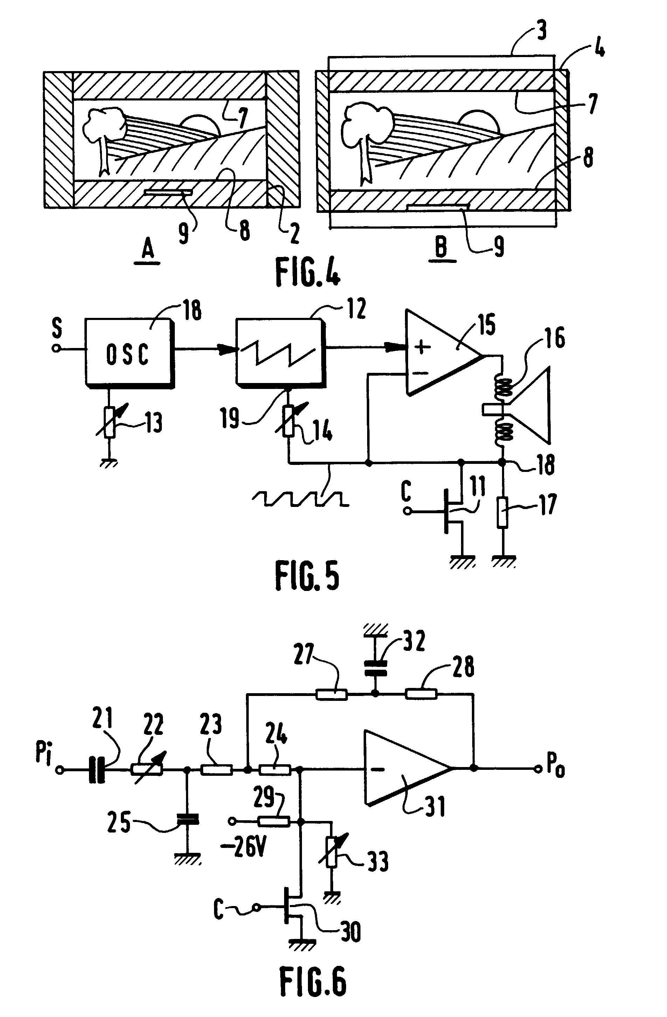

Sur la figure 1, les références 1 et 10 indiquent les bords latéraux de l'écran d'un récepteur d'images au format 16/9e. Les références 2 et 20 indiquent les bords latéraux d'une image au format 4/3, telle qu'elle doit être présentée sur l'écran lorsqu'on désire la regarder entièrement. Une partie de l'écran indiquée par des hachures n'est pas utilisée.

Sur la figure 2, la même image est représentée telle qu'on la verrait si on utilisait un récepteur 16/9e sans précautions spéciale en réglant son tuner sur une émission PAL ou SECAM avec une image de format 4/3. La durée utile d'une ligne PAL ou SECAM et la durée de trame sont les mêmes que celles utilisées pour la ligne et la trame de format 16/9e, et l'image représentée occupe donc tout l'écran. On se rend compte, notamment en comparant le ballon 4 à celui de la figure 1, que l'image est déformée par allongement horizontal.

Sur la figure 3, les références D et F indiquent respectivement les limites haute et basse de l'écran du récepteur d'images au format 16/9e. Une image reçue au format 4/3 est présentée ainsi lorsqu'on veut une image la plus grande possible. Les références 3 et 6 indiquent les limites haute et basse de l'image 4/3, qui sont alors en dehors de l'écran. Les bords latéraux de l'image sont alignés sur ceux de l'écran mais les parties d'image entre les limites 3 et D d'une part et entre les limites F et 6 d'autre part sont perdues.

Avec un appareil muni d'une mémoire d'image, la situation de la figure 1 est obtenue en enregistrant l'image reçue dans une telle mémoire, sans l'afficher, puis en l'affichant par relecture de la mémoire en commençant à lire chaque ligne dans la mémoire en retard par rapport au début du balayage de la ligne de l'écran, de façon que l'image reproduite commence seulement en 2, et à une vitesse telle que la fin de la lecture de la ligne se produit en 20 avant que le bord droit de l'écran ne soit atteint.

Avec ce même appareil, la situation de la figure 3 est obtenue en commençant à lire la mémoire à partir d'une adresse qui correspond à la ligne D de l'image reçue, et en s'arrêtant à la ligne qui correspond à la ligne F de l'image reçue. Des mesures doivent éventuellement être prises pour engendrer des lignes supplémentaires afin de disposer d'un nombre de lignes égal au nombre de lignes de l'écran entre les lignes D et F.

Selon l'invention, la situation de la figure 1 est obtenue en réduisant l'amplitude du balayage horizontal du tube cathodique, alors que l'amplitude de la déviation verticale est conservée normale. La situation de la figure 3 est obtenue en augmentant l'amplitude du balayage vertical du tube cathodique, c'est-à-dire l'espacement entre les lignes, alors que l'amplitude de la déviation horizontale est conservée normale.

On appelera DH et AV respectivement l'amplitude horizontale et l'amplitude verticale, et on conviendra que DH et AV valent 1 pour le balayage normal de l'écran 16/9e.

Les moyens de réglage de réglage de l'espacement vertical des lignes et de la longueur des lignes de l'image reproduite sont dimensionnés tous deux pour permettre d'obtenir deux valeurs d'espacement AV des lignes, à savoir 1,333 et 1, qui sont entre elles dans un rapport égal au rapport entre les deux susdits formats, et deux valeurs DH de longueur de ligne, à savoir 1 et 0,75, qui sont entre elles dans le même rapport (1 divisé par 0,75 vaut 1,333). En effet le rapport entre les formats est de 16/9e divisé par 4/3, soit un rapport de 4/3 ou 1,333.

Ces deux moyens de réglage sont couplés pour agir ensemble ; ainsi dans le cas de la situation de la figure 1 on a : DH=0,75 et AV=1, et dans le cas de la situation de la figure 3 les deux valeurs de DH et AV sont modifiées ensemble et on a : DH=1 et AV=1,333.

Les moyens de réglage sont directement accessibles par l'usager de l'appareil, qui peut donc choisir lui même la situation qu'il désire.

Les moyens de réglage sont en outre d'un type à variation continue, de façon que toutes les situations intermédiaires entre celle de la figure 1 et celle de la figure 3 puissent aussi être obtenues. De préférence l'accès à un tel réglage est réalisé au moyen de la télécommande de l'appareil, qui comporte une ou plusieurs touches à cet effet.

La figure 4 illustre l'avantage d'une telle possibilité : la figure 4A montre la même situation que la figure 1, dans le cas où l'émission en cours est celle d'un film en "Cinémascope". Le bord droit de l'image reçue en 4/3 est toujours indiqué par la référence 2, mais les bords haut et bas de l'image utile, celle du film, indiqués par les références 7 et 8, laissent une partie d'écran inutilisée au dessus et au dessous de l'image. Une zone 9 est prévue pour des sous-titres éventuels.

Il est clair que dans la situation de la figure 3, les sous-titres seraient à l'extérieur de l'écran. La situation de la figure 4B qui correspond à une dimension intermédiaire de la longuaur des lignes et de l'espacement entre lignes permet d'obtenir une image plus grande que dans le cas de la figure 4A tout en conservant la zone 9 de sous-titres visible.

L'étage de balayage vertical, dont le schéma synoptique est représenté sur la figure 5, comporte un oscillateur 18 synchronisé par un signal de synchronisation amené sur une entrée S, et dont la fréquence d'oscillation libre est réglée par une résistance variable 13, suivi par un générateur de rampe 12 qui fournit des signaux en dent de scie à une entrée "+" d'un amplificateur de sortie 15, lequel fournit enfin un courant de déviation à un bobinage de déviation verticale 16. Ce bobinage est relié à la masse via une résistance 17 de mesure de courant, et le signal recueilli au point 18 est ramené à une entrée "-" de l'amplificateur 15, pour créer une contre-réaction, ainsi qu'à une entrée 19 du générateur de rampe 12, via une résistance réglable 14, afin d'y créer une non-linéarité réglable en forme de "S" nécessitée par le système. Tout ceci est connu de l'homme du métier.

Dans un appareil selon l'invention, un transistor à effet de champ (FET) 11 est monté avec son espace drain-source connecté en parallèle sur la résistance 17. Ce transistor est commandé par une tension de commande C appliquée à sa grille. Comme l'on sait, l'espace drain-source d'un transistor à effet de champ se comporte comme une résistance réglable et cette résistance est en parallèle sur la résistance 17 : ainsi la tension engendrée au point 18 par un courant donné dans le bobinage de déviation est variable en fonction de la tension de commande C, et par conséquent la contre-réaction est modifiée ce qui agit sur l'amplitude du courant de déviation. Un modèle transistor FET de petite puissance est suffisant, par exemple celui connu sous la référence "Jedec" BF256.

La tension d'alimentation du circuit de la figure 5 peut être abaissée au minimum juste nécessaire pour permettre le balayage vertical complet de l'écran. Ainsi les parties de la dent de scie de balayage vertical qui donneraient des points d'image en dehors de l'écran pour certains réglages du gain de l'amplificateur sont écrêtées, le signal ayant dans ce cas la forme représentée sur la figure en dessous de la résistance 14.

L'appareil est muni de façon connue en soi d'un circuit de balayage horizontal du type dit "modulateur à diodes". Un tel circuit est conçu pour permettre une modification dynamique de l'amplitude horizontale, c'est-à-dire pour que cette amplitude puisse varier au cours d'une même trame, sans influer sur les tensions engendrées à partir du circuit de balayage horizontal. Ainsi on peut faire varier l'amplitude de façon parabolique pendant la durée d'une trame pour apporter une correction connue dite "est-ouest". Les circuits "modulateurs à diodes" connus sont donc pourvus d'une borne de connexion pour un signal de commande de l'amplitude.

La tension destinée à être appliquée à cette borne de commande pour faire ainsi varier l'amplitude est engendrée par un circuit dont un exemple de réalisation est représenté sur la figure 6. A une entrée Pi est amené un signal en forme de paraboles engendré de façon connue. Ce signal est transmis via une capacité 21 et trois résistances en série 22, 23, 24 à l'entrée d'un amplificateur 31, dont la borne de sortie Po est reliée à la susdite borne de connexion pour un signal de commande de l'amplitude du modulateur à diodes (non représenté). La résistance 22 est ajustable afin de régler l'amplitude des paraboles. Une capacité 25 relie à la masse le point commun des résistances 22 et 23. Une contre-réaction est obtenue au moyen de deux résistances 27 et 28 en série entre la sortie de l'amplificateur (qui apporte un déphasage de 180° au signal) et son entrée. Le point commun de ces deux résistances est relié à la masse par une capacité 32 de façon à ce que la contre-réaction agisse seulement en courant continu.

L'entrée de l'amplificateur est en outre reliée au point milieu d'un pont diviseur de tension fait de deux résistances 29 et 33 dont l'une est variable et qui est placé entre la masse et une borne "-26V" reliée à une source de tension non représentée. La résistance variable 33 a pour but de permettre un réglage du niveau de tension continue du signal de sortie de l'amplificateur, du fait qu'elle est un des éléments définissant la valeur de la contre-réaction. Tout ceci est connu de l'homme du métier.

Dans un appareil selon l'invention, un transistor à effet de champ (FET) 30 est monté avec son espace drain-source connecté en parallèle sur la résistance 33. Ce transistor joue le rôle de résistance variable et sa grille est commandée par la tension de commande C.

L'appareil est équipé d'un microprocesseur qui notamment gère les ordres donnés par l'usager au moyen de son boitier de télécommande. La tension de commande C, qui est commune aux deux montages des figures 5 et 6, est engendrée à l'aide de ce microprocesseur en réponse à un ordre de télécommande. Ceci peut par exemple être obtenu en programmant le microprocesseur pour qu'il engendre un signal dont le facteur de forme varie en fonction du format désiré. Ce signal, transmis via une capacité, puis aligné à la masse de façon à fixer à zéro volt sa partie la plus haute, et enfin intégré, fournit ainsi une tension continue négative variable apte à commander la grille des transistors à effet de champ 11 et 30.

Le microprocesseur est alors utilisé aussi pour gérer le réglage d'amplitude des balayages horizontal et vertical. Lors de la fabrication de l'appareil, le processus de réglage comporte une étape dans laquelle le microprocesseur mémorise les valeurs, qui sont un peu différentes d'un appareil à l'autre, du facteur de forme à engendrer pour obtenir les deux limites désirées pour les amplitudes. Celles-ci peuvent ainsi être réglées exactement par le microprocesseur (au moyen des valeurs memorisées en question). Dès lors la gamme de réglage des susdits moyens de réglage accessibles par l'usager s'étend entre les deux susdites limites.

On peut imaginer d'autres manières de réaliser la commande. Par exemple au lieu d'engendrer la tension par intégration d'un signal de forme variable on pourrait utiliser un convertisseur numérique / analogique. On pourrait aussi dans le cas du circuit de la figure 6, au lieu d'utiliser un transistor FET, uiliser comme source de tension "-26V" une source programmable numériquement et qui serait ajustée dans une plage adéquate autour de -26 volt.

Dans les téléviseurs connus qui ne comportent pas de moyens de traitement d'images basés sur des mémoires d'images, le balayage de l'écran est synchrone avec l'envoi des informations video par l'émetteur, et le balayage de lignes est réglé avec une amplitude telle que les lignes représentées débordent légèrement à l'extérieur de l'écran, notamment pour rendre invisible, en le repoussant hors de l'écran, un effet de "flammèches" au niveau des bords verticaux de l'image, dû au fait que le récepteur cherche à identifier des signaux video alors qu'il n'y en a plus dans le signal reçu. Lorsque l'image est affichée comme sur la figure 1, les bords verticaux de l'image et le défaut sont visibles. Dans le cas d'un téléviseur qui comporte des moyens de traitement d'image basés sur des mémoires d'images, le problème n'existe pas puisque seuls les points utiles lus dans la mémoire sont représentés. Dans le cas d'un appareil selon l'invention, muni d'un circuit video délivrant un créneau de tension pour la suppression de la luminance pendant les retours de balayage lignes, ce défaut est pallié du fait que l'apareil est muni de moyens pour faire commencer ledit créneau dès qu'une information video cesse d'être présente à la fin d'une ligne, et faire durer ledit créneau au moins jusqu'à ce qu'une information video soit à nouveau présente au début de la ligne suivante. Lorsque l'appareil comporte un circuit d'horloge avec une horloge maître à une fréquence multiple de la fréquence de lignes et de la fréquence de sous-porteuse couleur, circuit qui fournit différents tops de synchronisation par comptage de temps d'horloge, ces moyens peuvent être réalisés facilement en repérant les instants de comptage convenables du circuit d'horloge.

Il faut en outre tenir compte du fait que lorsque l'image est différente de celle représentée par la figure 2, sa surface est différente alors que la durée de balayage est la même, et par conséquent la luminosité sera différente si l'on ne prend pas de précaution particulière. Dans le cas de la figure 1, l'image est plus petite et donc plus lumineuse, alors que dans le cas de la figure 3, c'est le contraire qui se produit.

Pour corriger ces écarts de luminosité, on utilise le signal variable de commande du format pour agir aussi sur le circuit d'amplification video, afin de modifier l'amplitude du signal appliqué au tube cathodique.

Les circuits video peuvent par exemple être du type décrit dans la demande de brevet EP-A-0 375 038 de la Demanderesse, auquel on se reportera pour plus de détails. Ces circuits vidéo assurent, entre autres, une préamplification des signaux video avec un gain réglable au moyen d'une tension de commande variable, dans le but de modifier le contraste de l'image, le téléviseur étant muni d'autre part d'un circuit de contrôle du contraste comprenant un dispositif de comparaison des valeurs de crête du signal vidéo avec un seuil de référence, le signal issu du dépassement de ce seuil étant appliqué, après intégration, pour commander le gain réglable de préamplification, et un dispositif de réglage manuel du contraste délivrant un autre signal de commande, dépendant de l'utilisateur, et qui est également appliqué pour commander le gain réglable de préamplification. Le gain nominal d'amplification du signal vidéo étant suffisamment élevé pour que, pour la majorité des images reçues, les valeurs de crête du signal vidéo (de chacun des signaux vidéo R, V, B,) atteignent ledit seuil de référence, ce seuil de référence est réglable en fonction de la commande de contraste venant de l'utilisateur, et c'est cette variation du seuil qui constitue en fin de compte le dispositif de réglage manuel du contraste.

Avec un tel circuit, la correction en fonction du format d'image est appliquée de façon à modifier le seuil de référence. L'homme du métier peut facilement imaginer des moyens pour ajouter, avec la pondération voulue, le signal variable de commande du format au signal de comande de contraste dépendant de l'utilisateur.

## Revendications

1. Appareil d'affichage d'images pour afficher des images à partir d'un signal vidéo d'entrée, l'appareil étant muni d'un écran d'affichage au format 16/9e, et de moyens d'affichage sur cet écran, comportant un circuit de balayage horizontal et un circuit de balayage vertical, pour afficher sur l'écran une image d'entrée correspondant au signal vidéo d'entrée, l'image affichée étant constituée d'une suite de lignes de longueur DH, mutuellement séparées l'une de l'autre verticalement par un espacement AV, où DH a une valeur $DH_o$ et AV a une valeur $AV_o$ quand une image vidéo de format 16/9 est normalement affichée sur l'écran, comportant des moyens analogiques de réglage du balayage horizontal, susceptibles de commander une variation progressive de l'amplitude de balayage par action directe sur le dit circuit de balayage horizontal, et des moyens analogiques de réglage du balayage vertical, susceptibles de commander une variation progressive de l'amplitude de balayage par action directe sur le dit circuit de balayage vertical, **caractérisé en ce que**, pour la réception normale d'images d'entrée en format 4/3, il comprend des moyens de commutation pour agir sur les moyens analogiques de réglage du balayage horizontal de façon à donner à l'amplitude du balayage horizontal la valeur DH = 3/4 DH$_o$, sans toucher au balayage vertical, et la commande de variation des dits moyens analogiques est accessible à l'usager de l'appareil cependant que ces moyens sont couplés, pour permettre à l'usager d'augmenter de façon progressive DH et AV, tout en maintenant une relation entre DH et AV, telle que :

$$\frac{DH/DH_o}{AV/AV_o} = 3/4, \text{ ou } 3/4 \, DH_o \le DH \le DH_o$$

**2.** Appareil selon la revendication 1, **caractérisé en ce qu'**il est muni de moyens pour réaliser l'accès de l'usager à la dite commande de variation des dits moyens analogiques de réglage par une télécommande.

**3.** Appareil selon l'une des revendications 1 ou 2, dont l'écran est un tube à rayons cathodiques, **caractérisé en ce que** le circuit de balayage horizontal avec les moyens analogiques de réglage du balayage horizontal sont constitués par un circuit du type connu sous le nom de modulateur à diodes, associé à un circuit générateur de paraboles pour une correction dite est-ouest, qui comporte des moyens pour agir sur le niveau de tension moyen en courant continu des paraboles dans le circuit générateur de paraboles, pour la commande de l'amplitude horizontale.

**4.** Appareil selon l'une quelconque des revendications 1 à 3, dont l'écran est un tube à rayons cathodiques, et qui comprend un générateur de dents de scie à fréquence trame avec un amplificateur pour injecter le dit courant en dents de scie dans un bobinage déviateur de faisceau, **caractérisé en ce que**, une contre-réaction étant appliquée au dit amplificateur, il est muni de moyens pour faire varier le montant de cette contre-réaction afin de faire varier l'espacement entre les lignes.

**5.** Appareil selon la revendication 4, **caractérisé en ce que** il comporte des moyens pour écrêter les parties de la dent de scie qui produiraient des points d'image en dehors de l'écran.

**6.** Appareil selon l'une quelconque des revendications 1 à 5, muni d'un circuit vidéo qui délivre un créneau de tension de suppression de luminance pendant les retours de balayage ligne, **caractérisé en ce que** il est muni de moyens pour délivrer le dit créneau dès qu'une information vidéo cesse d'être présente à la fin d'une ligne, et faire durer ce créneau au moins jusqu'à ce qu'une information vidéo soit à nouveau présente au début de la ligne suivante.

**Patentansprüche**

**1.** Bildwiedergabeanordnung zur Wiedergabe von Bildern aufgrund eines Eingangsvideosignals, wobei die Anordnung mit einem Wiedergabeschirm im Format 16/9e und mit Mitteln zur Wiedergabe auf diesem Schirm versehen ist, die eine horizontale und eine vertikalen Abtastungsschaltung umfassen, um auf dem Schirm ein Eingangsbild wiederzugeben, das einem Eingangsvideosignal entspricht, wobei das wiedergegebene Bild aus einer Folge von Zeilen mit einer Länge DH gebildet wird, die voneinander vertikal durch einen Abstand AV getrennt sind, wobei DH einen Wert DH und AV einen Wert AV aufweist, wenn ein Videobild im Format 16/9 normal auf dem Schirm wiedergegeben wird, mit analogen Steuerungsmitteln für die horizontale Abtastung, die in der Lage sind, eine fortschreitende Veränderung der Abtastungsamplitude durch direkte Einwirkung auf die genannte horizontale Abtastungsschaltung zu steuern, und mit analogen Mitteln zur Steuerung der vertikalen Abtastung, die in der Lage sind, eine fortschreitende Veränderung der Abtastungsamplitude durch direkte Einwirkung auf die genannte vertikale Abtastungsschaltung zu steuern, <u>dadurch gekennzeichnet,</u> daß sie für den normalen Empfang von Eingangsbildern im Format 4/3 Kommutationsmittel umfaßt, um auf die analogen horizontalen Abtastungssteuerungsmittel so einzuwirken, daß der Amplitude der horizontalen Abtastung der Wert DH = 3/4 DH gegeben wird, ohne die vertikale Abtastung zu beeinflussen, und daß die Variationssteuerung der genannten analogen Mittel für den Benutzer der Anordnung zugänglich ist, wobei diese Mittel so gekoppelt sind, daß sie es dem Benutzer ermöglichen, DH und AV in fortschreitender Weise zu erhöhen und dabei eine Beziehung zwischen DH und AV beibehalten wird, bei der folgendes gilt:

$$\frac{DH/DH}{AV/AV} = 3/4,$$

wobei $3/4 \, DH_0 \le DH \le DH_0$.

**2.** Anordnung nach Anspruch 1, <u>dadurch gekennzeichnet,</u> daß sie mit Mitteln versehen ist, um den Zugriff des Benutzers auf die genannten Variationssteuerung der genannten analogen Regelmittel über eine Fernsteuerung zu ermöglichen.

**3.** Anordnung nach einem der Ansprüche 1 oder 2, deren Bildschirm eine Kathodenstrahlröhre ist, <u>dadurch gekennzeichnet,</u> daß die horizontale Abta-

stungssteuerung zusammen mit den analogen Regelmitteln der horizontalen Abtastung aus einer als Diodenmodulator bekannten Schaltung bestehen, die zu einer Parabelerzeugerschaltung für eine sogenannte Ost-West-Korrektur gehört, die Mittel umfaßt, um auf den mittleren Gleichstrom-Spannungspegel der Parabeln in der Parabelerzeugerschaltung zur Steuerung der horizontalen Amplitude einzuwirken.

4. Anordnung nach einem der Ansprüche 1 bis 3, deren Bildschirm eine Kathodenstrahlröhre ist und die einen Sägezahn-Teilbildfrequenzerzeuger mit einem Verstärker zur Einspeisung des genannten Sägezahnstroms in eine Strahlablenkspule umfaßt, dadurch gekennzeichnet, daß dem genannten Verstärker eine Rückkopplung zugeführt wird, sie mit Mitteln versehen ist, um die Stärke dieser Rückkopplung zu variieren, um den Abstand zwischen den Zeilen zu variieren.

5. Anordnung nach Anspruch 4, dadurch gekennzeichnet, daß sie Mittel umfaßt, um die Impulsspitzen der Sägezahnabschnitte abzuschneiden, die Bildpunkte außerhalb des Schirms erzeugen würden.

6. Anordnung nach einem der Ansprüche 1 bis 5, die mit einer Videoschaltung versehen ist, die einen Leuchtdichteunterdrückungs-Austastimpuls während der Zeilenabtastungs-Rückwege versehen ist, dadurch gekennzeichnet, daß sie mit Mitteln versehen, um den genannten Austastimpuls abzugeben, sobald keine Videoinformation mehr am Ende einer Zeile vorhanden ist, und diesen Austastimpuls wenigstens so lange dauern zu lassen, bis wieder eine Videoinformation am Anfang der folgenden Zeile vorhanden ist.

**Claims**

1. A picture display apparatus for displaying pictures based on an input video signal, the apparatus being provided with a display screen having a 16/9 format, and display means on this screen, comprising a line scanning circuit and a field scanning circuit, for displaying an input picture on the screen corresponding to the input video signal, the displayed image being constituted by a sequence of lines having a length DH and being vertically separated from each other by a spacing AV, in which DH has a value $DH_0$ and AV has a value $AV_0$ when a video picture of the 16/9 aspect ratio is normally displayed on the screen, comprising analog line scan control means capable of controlling a progressive variation of the scanning amplitude by directly acting on said line scanning circuit, and analog field scan control means capable of controlling a progressive variation of the scanning amplitude by directly acting on said field scanning circuit, characterized in that, for the normal reception of input pictures in a 4/3 aspect ratio, it comprises switching means for acting on the analog line scan control means in such a way that the line scan amplitude is given the value $DH = 3/4\ DH_0$ without affecting the field scanning, and the user of the apparatus has access to the control for varying said analog means while these means are coupled, so as to enable the user to progressively increase DH and AV, all this while maintaining a relation between DH and AV, such that:

$$\frac{DH/DH_0}{AV/AV_0} = 3/4, \text{ or } 3/4\ DH_0 \leq DH \leq DH_0$$

2. An apparatus as claimed in Claim 1, characterized in that it is provided with means for allowing the user access to said analog control means for varying said means by way of a remote-control device.

3. An apparatus as claimed in Claim 1 or 2, provided with a cathode-ray tube, characterized in that the line scanning circuit with the analog control means for the line scan are constituted by a circuit of the type known as diode modulator associated with a parabola generator circuit for an east-west correction, which comprises means for acting on the average d.c voltage level of the parabolas in the parabola generator circuit, for the control of the horizontal amplitude.

4. An apparatus as claimed in any one of Claims 1 to 3, whose screen is a cathode-ray tube, and which comprises a field frequency sawtooth current generator with an amplifier for injecting said sawtooth current into a beam deflection coil, characterized in that, with a negative feedback being applied to said amplifier, it is provided with means for varying the rising edge of this negative feedback so as to vary the spacing between the lines.

5. An apparatus as claimed in Claim 4, characterized in that it comprises means for clipping the portions of the sawtooth that would produce pixels outside the screen.

6. An apparatus as claimed in any one of Claims 1 to 5, provided with a video circuit which produces a voltage gap, or interval, for suppressing the luminance during the line retraces, characterized in that it is provided with means for producing said interval as soon as video information is no longer present at the end of a line, and for continuing this interval at least until video information is present again at the start of the next line.

FIG.1

FIG.2

FIG.3

FIG.4

FIG.5

FIG.6